# EUROPÄISCHE PATENTSCHRIFT

(11) **EP 2 668 243 B1**
(45) Veröffentlichungstag und Bekanntmachung des Hinweises auf die Patenterteilung: **30.03.2016**
(21) Anmeldenummer: 11700966.2
(22) Anmeldetag: 28.01.2011
(51) Int. Cl.: C09J 111/00

(54) **VERWENDUNG EINES EIN-KOMPONENTEN-KLEBSTOFFES ZUR KALTVERKLEBUNG VON BAUTEILEN EINER FÖRDERANLAGE**
USE OF A SINGLE-COMPONENT ADHESIVE FOR COLD ADHESIVE BONDING OF COMPONENTS OF A CONVEYOR SYSTEM
UTILISATION D'UNE COLLE À UN COMPOSANT POUR LE COLLAGE À FROID DE PIÈCES STRUCTURALES D'UN SYSTÈME DE TRANSPORT

(43) Veröffentlichungstag der Anmeldung: 04.12.2013
(73) Patentinhaber: ContiTech Transportbandsysteme GmbH, 30165 Hannover (DE)
(72) Erfinder: KERWEL, Wolfgang, 31515 Wunstorf (DE)
(74) Vertreter: Preusser, Andrea
(86) Internationale Anmeldenummer: PCT/EP2011/051185
(87) Internationale Veröffentlichungsnummer: WO 2012/100832

(56) Entgegenhaltungen:
- EP-A1- 0 031 420
- DE-A1- 3 926 946
- DE-A1-102008 055 482
- US-A- 3 427 268
- US-A- 6 054 527
- Hermann Onusseit, Sabina Schneider: "Stichwort: Klebstoffe", RÖMPP Online , 11-01204, August 2008 (2008-08), XP002659968, Gefunden im Internet: URL:http://www.roempp.com [gefunden am 2011-09-22]

## Beschreibung

Förderanlagen zum Transport von Material unterschiedlicher Art, beispielsweise Erz, Abraum und Gestein, erstrecken sich bis zu mehreren Kilometern, und zwar sowohl im Flachland wie auch in Gebirgen sowie im Rahmen des Übertage- und Untertagebergbaus.

Ein wesentliches Bauteil einer derartigen Förderanlage ist der elastische Fördergurt mit einer tragseitigen und laufseitigen Deckplatte. Das Deckplattenmaterial besteht zumeist aus einer vulkanisierten Kautschukmischung, insbesondere auf folgender Basis:
Naturkautschuk (NR)
Butadien-Kautschuk (BR)
Chloropren-Kautschuk (CR)
Styrolbutadien-Kautschuk (SBR)
Nitrilkautschuk (NBR)
NR/BR-Verschnitt
SBR/BR-Verschnitt

Von besonderer Bedeutung ist bislang CR, das sich durch eine hohe Flamm-, Witterungs- und Alterungsbeständigkeit auszeichnet, insbesondere für Fördergurte mit Einsatz im Untertagebergbau.

Fördergurte sind zumeist mit einem eingebetteten Festigkeitsträger bzw. Zugträger ausgestattet, wobei Textilfördergurte und insbesondere Stahlseilfördergurte zu nennen sind. Insbesondere bei Stahlseilfördergurten werden zwecks Schlitzschutzes noch Synthesecordquerarmierungen in die tragseitige und/oder laufseitige Deckplatte eingebracht.

Der Fördergurt kann in gemuldeter Form oder als Rohrfördergurt auftreten, wobei die geschlossene Ausführung eine zunehmende Bedeutung erlangt hat.

Weitere Bauteile einer Förderanlage sind:
Antriebstrommel
Umkehrtrommel
Tragrollen
Umlenkrollen
Korrekturrollen, insbesondere bei Rohrfördergurtanlagen
Schurren
Traggerüste

Im Rahmen der Überwachung von Förderanlagen kommen zudem Transponder und/oder Leiterschleifen und/oder Barcodes, die innerhalb der tragseitigen und/oder laufseitigen Deckplatte des Fördergurtes eingebettet sind sowie opto-elektronische Systeme, die die tragseitige und/oder laufseitige Oberfläche des Fördergurtes überwachen, zum Einsatz, verbunden mit einer vollelektronischen Auswerteeinrichtung.

Hinsichtlich des Standes der Technik derartiger Förderanlagen wird insbesondere auf folgende Patentliteratur verwiesen:

| | |
|---|---|
| DE 36 06 129 A1 | EP 1 187 781 B1 |
| DE 36 12 765 A1 | EP 1 222 126 B1 |
| DE 43 33 839 B4 | WO 2005/023688 A1 |
| EP 0 336 385 B1 | WO 2008/034483 A1 |
| EP 1 053 447 B1 | US 7 178 663 B2 |
| DE 10 2008 055 482 A1 | |

Neben der überwiegend mechanischen Zusammenfügung von Bauteilen einer Förderanlage kommen auch Hochleistungsklebestoffe zum Einsatz, insbesondere im Rahmen der Kaltverklebung. Von besonderer Bedeutung ist dabei die Verklebung von polymeren Bauteilen untereinander oder die Verklebung im Rahmen eines Polymer/Metallverbundes. Zum Einsatz kamen dabei bislang Zwei-Komponenten-Klebstoffe (2K-Klebstoffe). Bei diesem Kaltklebesystem ist die erste Komponente ein Klebstoff, beispielsweise auf der Basis von CR. Die zweite Komponente ist eine Verstärkerlösung oder ein Aktivator, beispielsweise Desmodur (Firma Bayer). Vor der Verklebung muss die Verstärkerlösung oder der Aktivator in den Klebstoff eingerührt werden. Der jetzt aktivierte Klebstoff ist jedoch nur eine begrenzte Zeit bearbeitbar und zudem aktivierungsabhängig von der Umgebungstemperatur. Das Restmaterial ist zum Schluss vollständig eingedickt und muss dem Abfall zugeführt werden.

Die Nachteile dieses Zwei-Komponenten-Klebstoffes sind insbesondere:
- Mischen der Komponenten, verbunden mit der Gefahr von Mischfehlern;
- Überschreiten der Topfzeit, dadurch Abfall durch nicht mehr verwendbare Reste;
- Hohe Temperatur- und Luftfeuchtigkeitsempfindlichkeit;
- Doppelte Lagerhaltung;
- Beschränkte Verarbeitbarkeit;
- Hohe Kosten.

Die Aufgabe der Erfindung besteht nun darin, einen Klebstoff bereitzustellen, der die oben genannten Nachteile vermeidet.

Gelöst wird diese Aufgabe durch die Verwendung eines Ein-Komponenten-Klebstoffes gemäß Anspruch 1.

Bei Förderanlagen kommt dieser Ein-Komponenten-Klebstoff(1K-Klebstoff) bei folgenden Bauteilen zum Einsatz:
- Ein Aufbauteil, beispielsweise ein Mitnehmerteil, Führungsteil, Rand- und Seitenwandprofile, das aus einem polymeren Werkstoff (Elastomer, Thermoplastisches Elastomer, Thermoplast) besteht, wird fußseitig mit der tragseitigen Oberfläche des elastischen Fördergurtes verklebt. Derartige Aufbauteile werden insbesondere in der folgenden Patentliteratur beschrieben:
   DE 32 19 170 A1
   DE 34 14 285 A1
   DE 10 2009 025 906 A1
   DE 10 2009 025 911 A1
- Eine drehbare Trommel aus Metall (z.B. Stahl), insbesondere eine Antriebstrommel oder Umkehrtrommel, die mit der laufseitigen Oberfläche des elastischen Fördergurtes korrespondiert, wird mit einer Oberflächenbeschichtung aus einem polymeren Werkstoff (Elastomer, Thermoplastisches Elastomer, Thermoplast) versehen, wobei die Oberflächenbeschichtung mit der Oberfläche der Trommel verklebt ist.
- Eine drehbare Rolle aus Metall (z.B. Stahl), insbesondere eine Tragrolle, Umlenkrolle oder Korrekturrolle, die ebenfalls mit der laufseitigen Oberfläche des elastischen Fördergurtes korrespondiert, wird mit einer Oberflächenbeschichtung aus einem polymeren Werkstoff (Elastomer, Thermoplastisches Elastomer, Thermoplast) versehen, wobei die Oberflächenbeschichtung mit der Oberfläche der Rolle verklebt ist.
- Eine Schurre aus Metall (z.B. Stahl, Blech), die sich im Fördermaterialaufgabebereich einer Förderanlage befindet, wird zumindest zur Fördermaterialseite hin mit einer Oberflächenbeschichtung aus einem polymeren Werkstoff (Elastomer, Thermoplastisches Elastomer, Thermoplast) versehen, wobei die Oberflächenbeschichtung mit der Oberfläche der Schurre verklebt ist.

Die Oberflächenbeschichtung der Trommel, Rolle und Schurre dient dem Verschleißschutz.

Der Ein-Komponenten-Klebstoff ist vor dem Auftragen eine Suspension (Dispersion), wobei als Lösungsmittel (Dispergiermittel) beispielsweise Benzin, Methylethylketon, Aceton oder Ethylacetat oder ein Gemisch hiervon eingesetzt werden. Der Anteil des Lösungsmittels beträgt vorzugsweise 65 bis 80 Gew.-%.

Die Suspension enthält insbesondere folgende Bestandteile:
- CR mit einem bevorzugten Mengenbereich von 10 bis 20 Gew.-%;
- erfindungsgemäß ein Klebeharz, beispielsweise ein Alkylphenolharz, mit einem Mengenbereich von 10 bis 15 Gew.-%;
- ein Metalloxid, beispielsweise MgO und/oder ZnO, mit einem bevorzugten Mengenbereich von 0,5 bis 3 Gew.-%;
- einen Vulkanisationsbeschleuniger, beispielsweise Thirurame, Thiazole,
Dithiocarbamate oder Xanthogenate, mit einem bevorzugten Mengenbereich von 0,5 bis 2 Gew.-%.

In der folgenden Tabelle wird in diesem Zusammenhang ein Rezepturbeispiel angegeben.

| **Bestandteile** | **Mengen in Gew.-%** |
|---|---|
| Lösungsmittel | 74,4 |
| CR | 12,0 |
| Alkylphenolharz | 11,0 |
| MgO und ZnO | 1,5 |
| Vulkanisationsbeschleuniger | 1,1 |

Nach dem Auftragen des Ein-Komponenten-Klebstoffes auf die entsprechenden Haftflächen verdunstet das Lösungsmittel bei einer gleichzeitig zunehmenden Haftfähigkeit mit Langzeitwirkung.

## Patentansprüche

1. Verwendung eines Ein-Komponenten-Klebstoffes zur Kaltverklebung von Bauteilen einer Förderanlage, wobei der Ein-Komponenten-Klebstoff eine Suspension ist, welche 10 bis 15 Gew.-% eines Klebharzes enthält, und wobei das Bauteil ein Aufbauteil ist, welches aus einem polymeren Werkstoff besteht und fußseitig mit der tragseitigen Oberfläche eines elastischen Fördergurtes verklebt ist, oder wobei das Bauteil eine drehbare Trommel aus Metall ist, die mit der laufseitigen Oberfläche eines elastischen Fördergurtes korrespondiert und mit einer Oberflächenbeschichtung aus einem polymeren Werkstoff versehen ist, wobei die Oberflächenbeschichtung mit der Oberfläche der Trommel verklebt ist oder wobei das Bauteil eine drehbare Rolle aus Metall ist, die mit der laufseitigen Oberfläche eines elastischen Fördergurtes korrespondiert und mit einer Oberflächenbeschichtung aus einem polymeren Werkstoff versehen ist, wobei die Oberflächenbeschichtung mit der Oberfläche der Rolle verklebt ist oder wobei das Bauteil eine Schurre aus Metall ist, die sich im Fördermaterialaufgabebereich einer Förderanlage befindet und zumindest zur Fördermaterialseite hin mit einer Oberflächenbeschichtung aus einem polymeren Werkstoff versehen ist, wobei die Oberflächenbeschichtung mit der Oberfläche der Schurre verklebt ist.

2. Verwendung nach Anspruch 1, wobei das Lösungsmittel der Suspension einen Anteil von 65 bis 80 Gew.-% hat.

3. Verwendung nach Anspruch 1 oder 2, wobei die Suspension Chloropren-Kautschuk enthält.

4. Verwendung nach Anspruch 3, wobei der Anteil an Chloropren-Kautschuk 10 bis 20 Gew.-% beträgt.

5. Verwendung nach einem der Ansprüche 1 bis 4, wobei die Suspension ein Metalloxid enthält.

6. Verwendung nach Anspruch 5, wobei der Anteil an Metalloxid 0,5 bis 3 Gew.-% beträgt.

7. Verwendung nach einem der Ansprüche 1 bis 6, wobei die Suspension einen Vulkanisationsbeschleuniger enthält.

8. Verwendung nach Anspruch 7, wobei der Anteil an dem Vulkanisationsbeschleuniger 0,5 bis 2 Gew.-% beträgt.

## Claims

1. Use of a single-component adhesive for the cold adhesive bonding of components of a conveyor system, where the single-component adhesive is a suspension which comprises from 10 to 15% by weight of an adhesive resin, and where the component is an add-on part which is composed of a polymeric material and the base of which has been adhesive-bonded to the load-bearing surface of a resilient conveyor belt, or where the component is a rotatable drum made of metal, which drum corresponds to the drive-side surface of a resilient conveyor belt and has a surface coating made of a polymeric material, where the surface coating has been adhesive-bonded to the surface of the drum, or where the component is a rotatable roller made of metal, which roller corresponds to the drive-side surface of a resilient conveyor belt and has a surface coating made of a polymeric material, where the surface coating has been adhesive-bonded to the surface of the roller, or where the component is a chute made of metal, the location of which chute in a conveyor system is in the region of application of material requiring conveying, and which chute has, at least on the side facing the material requiring conveying, a surface coating made of a polymeric material, where the surface coating has been adhesive-bonded to the surface of the chute.

2. Use according to Claim 1, where the solvent content of the suspension is from 65 to 80o by weight.

3. Use according to Claim 1 or 2, where the suspension comprises chloroprene rubber.

4. Use according to Claim 3, where the chloroprene rubber content is from 10 to 20% by weight.

5. Use according to any of Claims 1 to 4, where the suspension comprises a metal oxide.

6. Use according to Claim 5, where the metal oxide content is from 0.5 to 3% by weight.

7. Use according to any of Claims 1 to 6, where the suspension comprises a vulcanization accelerator.

8. Use according to Claim 7, where the vulcanization accelerator content is from 0.5 to 2% by weight.

## Revendications

1. Utilisation d'un adhésif à un composant pour le collage à froid de pièces d'une installation de transport, l'adhésif à un composant étant une suspension qui contient 10 à 15% en poids d'une résine adhésive et la pièce étant un accessoire, qui est constitué par un matériau polymère et qui est collé, au niveau de sa base, à une surface côté support d'une courroie de transport élastique, ou la pièce étant un tambour rotatif en métal, qui correspond à la surface intérieure d'une courroie de transport élastique et qui est pourvu d'un revêtement de surface en un matériau polymère, le revêtement de surface étant collé à la surface du tambour, ou la pièce étant un rouleau rotatif en métal, qui correspond à la surface intérieure d'une courroie de transport élastique et qui est pourvu d'un revêtement de surface en un matériau polymère, le revêtement de surface étant collé à la surface du rouleau, ou la pièce étant une rampe de chargement en métal, qui se trouve dans la zone de chargement du matériau à transporter d'une installation de transport et qui est pourvue, au moins du côté du matériau à transporter, d'un revêtement de surface en un matériau polymère, le revêtement de surface étant collé à la surface de la rampe de chargement.

2. Utilisation selon la revendication 1, le solvant de la suspension représentant une proportion de 65 à 80% en poids.

3. Utilisation selon la revendication 1 ou 2, la suspension contenant du caoutchouc de chloroprène.

4. Utilisation selon la revendication 3, la proportion de caoutchouc de chloroprène étant de 10 à 20% en poids.

5. Utilisation selon l'une quelconque des revendications 1 à 4, la suspension contenant un oxyde métallique.

6. Utilisation selon la revendication 5, la proportion d'oxyde métallique étant de 0,5 à 3% en poids.

7. Utilisation selon l'une quelconque des revendications 1 à 6, la suspension contenant un accélérateur de vulcanisation.

8. Utilisation selon la revendication 7, la proportion d'accélérateur de vulcanisation étant de 0,5 à 2% en poids.
